# EUROPEAN PATENT SPECIFICATION

(11) **EP 2 271 034 B1**
(45) Date of publication and mention of the grant of the patent: **10.05.2017**
(21) Application number: 09729137.1
(22) Date of filing: 17.02.2009
(51) Int. Cl.: H04L 29/06

(54) **PACKAGE PUBLISHING AND APPLYING CONTROL METHOD AND DEVICE**
PAKETVERÖFFENTLICHUNG UND ANWENDBARES STEUERUNGSVERFAHREN UND VORRICHTUNG
PROCÉDÉ ET DISPOSITIF DE COMMANDE D'APPLICATION ET D'ÉDITION DE PROGICIELS

(30) Priority: 01.04.2008 CN 200810066435
(43) Date of publication of application: 05.01.2011
(73) Proprietor: Huawei Technologies Co., Ltd., Longgang District Shenzhen, Guangdong 518129 (CN)
(72) Inventor: LIN, Yangbo, Longgang District 518129, Shenzhen (CN)
(74) Representative: Kreuz, Georg Maria
(86) International application number: PCT/CN2009/070453
(87) International publication number: WO 2009/121249

(56) References cited:
- CN-A- 101 080 091
- US-A1- 2007 116 018
- "Gateway control protocol: Version 3 ; H.248.1 (09/05)- series H : Audiovisual and multimedia systems - Infrastructure of audiovisual services - Communication procedures", ITU-T STANDARD IN FORCE (I), INTERNATIONAL TELECOMMUNICATION UNION, GENEVA, CH, no. H.248.1 (09/05), 13 September 2005 (2005-09-13), XP017404787,
- YANGBO LIN HUAWEI TECHNOLOGIES P R CHINA: "Updated draft of ITU-T H.248.PIPA;48 (WP 2/16)", ITU-T DRAFTS ; STUDY PERIOD 2009-2012, INTERNATIONAL TELECOMMUNICATION UNION, GENEVA ; CH, vol. Study Group 16 ; 3/16, 23 January 2009 (2009-01-23), pages 1-8, XP017449681, [retrieved on 2009-01-23]
- ARANGO M. ET AL.: 'Media Gateway Control Protocol (MGCP) Version 1.0' RFC2705 October 1999,
- FOSTER B. ET AL.: 'The Media Gateway Control Protocol (MGCP) Bulk Audit Package' RFC3624 November 2003,

## Description

### FIELD OF THE INVENTION

The present invention relates to communications technologies, and in particular, to a method and an apparatus for controlling publishing and application of packages.

### BACKGROUND OF THE INVENTION

A Media Gateway Controller (MGC) and a Media Gateway (MG) are two key components of a packet-based network in an architecture where the service is separated from the bearer. The MGC is responsible for the service control function, and the MG is responsible for the media bearing function. In this way, the service control plane is separated from the media bearer plane, network resources are shared sufficiently, device upgrade and service extension are simplified, and therefore the costs of development and maintenance are slashed.

The (media) gateway control protocol is a main protocol for communication between the MG and the MGC. Currently, two commonly used gateway control protocols are H.248/MeGaCo and Media Gateway Control Protocol (MGCP). The interaction operations between the MGC and the MG are performed through command requests and replies in the (media) gateway control protocol. Command parameters, also known as descriptors, are categorized into Property, Signal, Event, and Statistic. To facilitate operations, service-dependent parameters aggregate into a package logically.

A package represents functions specific to a service or combination of the functions. With the development of services, the functions are enhanced or extended, and accordingly, the package needs to be enhanced or extended. Therefore, the package extending mechanism stipulates that a new package may be derived from an existing package. The existing package is called a base package, and the derived new package is called an extended package. Package elements of a base package include: property, signal, event, statistic, and the corresponding procedure, which are all inherited by the extended package.

In order to facilitate the MGC to control the MG, the MG needs to publish the packages supported by the MG. The MGC can apply a package to the control interface between the MGC and the MG only if the MG has published the package to the MGC.

The prior art has at least the following problems:
In the case that the MG does not publish the package to the MGC, the prior art does not specify whether the MG can apply the package to the control interface between the MG and the MGC. If the MG can apply the package, the MGC is unable to process the messages that come from the MG and apply this package when the MGC does not support application of this package because the MG does not publish the package or the MGC does not apply the package.

ITU-T Recommendation H.248.1 was approved on 13 September 2005. In the approved ITU-T Recommendation H.248.1, the connection model for the protocol describes the logical entities, or objects, within the Media Gateway that can be controlled by the Media Gateway Controller. The main abstractions used in the connection model are terminations and contexts.

### SUMMARY OF THE INVENTION

The present invention provides a method and an apparatus for controlling publishing and application of packages to solve the contradiction of publishing and applying packages on a control interface between the MGC and the MG in the existing mechanism.

According to the first aspect the method for controlling publishing and application of packages of the present invention includes:
receiving, by a MG, a first audit command request delivered by a MGC, where the first audit command request carries a package descriptor indicating an audit of packages supported by the MG;
adding, by the MG, identifiers of packages supported by the MG into a first audit command response according to the set parameters of a BPP property; wherein the first audit command response is returned to the MGC; and
selecting, by the MG, a package among packages corresponding to the identifiers published by the MG, and applying this package to a control interface between the MG and the MGC;
wherein, before receiving (203), the method further comprises:
   receiving (201), by the MG, a command from the MGC, wherein the command carries a Base Package Publishing, BPP, property;
   setting (202), by the MG, parameters of the BPP property according to the command received from the MGC; if the value of the BPP property indicates that the MGC allows the MG to choose whether to publish the base package, choosing, by the MG, whether to publish the base package along with the extended package corresponding to the base package at time of publishing the package.

According to the second aspect the MGC of the present invention includes:
a sending unit, configured to: send a first command request to an MG, where the first command request carries a package descriptor that instructs the MG to publish packages supported by the MG, and send a second command request to the MG, wherein the second command request instructs the MG to set a Base Package Publishing, BPP, property in order to enable the MG to set the BPP property according to the second command request; if the value of the BPP property indicates that the MGC allows the MG to choose whether to publish the base package, choosing, by the MG, whether to publish the base package along with the extended package corresponding to the base package at time of publishing the package; and
a receiving unit, configured to receive a first command response that comes from the MG and corresponds to the first command request, where the first command response carries identifiers of the packages supported by the MG, wherein the identifiers of the packages are added by the MG into the first command response according to the set parameters of the BPP property.

According to the third aspect the MG of the present invention includes:
a receiving unit, configured to: receive a second command request sent by a Media Gateway Controller, MGC, wherein the second command request instructs the MG to set a Base Package Publishing, BPP, property, and receive a first command request from the MGC, where the first command request carries a package descriptor that instructs the MG to publish packages supported by the MG;
a processing unit, configured to: set parameters of the BPP property according to the second command request sent by the MGC, add identifiers of the packages supported by the MG into a first command response returned to the MGC, according to the set parameters of the BPP property, and select a package among the packages corresponding to the published identifiers supported by the MG, and apply this package to a control interface between the MG and the MGC; if the value of the BPP property indicates that the MGC allows the MG to choose whether to publish the base package, choosing, by the MG, whether to publish the base package along with the extended package corresponding to the base package at time of publishing the package; and
a sending unit, configured to send a first command response to the MGC, where the first command response corresponds to the first command request and carries the identifiers of the packages supported by the MG.

In the present invention, the MG selects a package among the identifiers published by the MG itself and applies the selected package, thus preventing the MG from selecting an unpublished package that is not supported by the MGC. Therefore, the contradiction of publishing and applying packages on the control interface between the MGC and the MG is solved.

### BRIEF DESCRIPTION OF THE DRAWINGS

FIG. 1 shows a networking diagram of an MG and an MGC applied in an embodiment of the present invention;
FIG. 2 is a flowchart of Embodiment 1 of the present invention;
FIG. 3 is a flowchart of Embodiment 2 of the present invention;
FIG. 4 is a flowchart of Embodiment 3 of the present invention;
FIG. 5 is a flowchart of Embodiment 4 of the present invention; and
FIG. 6 shows a system structure of Embodiment 5 of the present invention.

### DETAILED DESCRIPTION OF THE EMBODIMENTS

To make the technical solution of the present invention clearer, the following describes the embodiments of the present invention in more detail with reference to accompanying drawings.

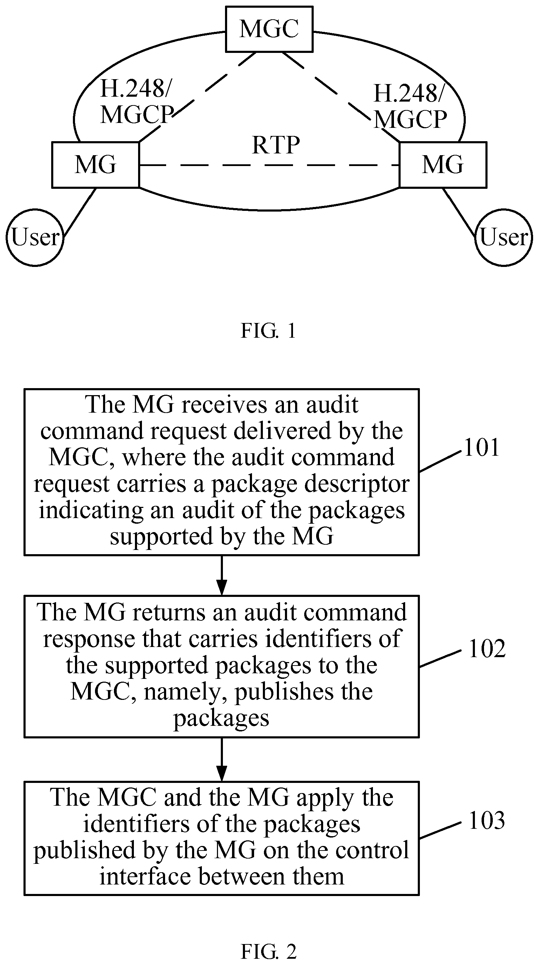

FIG. 1 shows a networking diagram of an MG and an MGC applied in an embodiment of the present invention.

The (media) gateway control protocol is a main protocol for communication between the MG and the MGC. Currently, two commonly used gateway control protocols are H.248/MeGaCo and Media Gateway Control Protocol (MGCP).

Taking the H.248 protocol as an example, various resources on the MG are abstractly expressed as terminations, which are also known as individual terminations. Terminations are categorized into physical termination and ephemeral termination. A physical termination represents a physical entity of semi-permanent existence, for example, Time Division Multiplex (TDM) timeslots; and an ephemeral termination represents a public resource released after the resource is requested for temporary use and released after the use, for example, Real-Time Transport Protocol (RTP) streams. A special termination called "root termination" represents the entirety of the MG. Correlations between terminations are abstractly expressed as context. A context may include multiple terminations. Therefore, relationships between terminations are depicted by topology. A termination not correlated with any other termination is included in a special context called "null".

Based on the preceding abstract connection model, the interactions between the service and the bearer are essentially operations performed on the termination and the context. Such operations are performed through command requests and replies exchanged between the MGC and the MG. The types of command include: Add, Modify, Subtract, Move, AuditValue, AuditCapabilities, Notify, and ServiceChange. Command parameters, also known as descriptors, are categorized into Property, Signal, Event, and Statistic. Service-dependent parameters aggregate into a package logically.

The control exercised by the MGC to the MG may be intended for a termination or the stream on the termination. A TerminationState descriptor covers the features not specific to streams on the termination, for example, ServiceState, and EventBufferControl. A Media descriptor covers the features specific to streams on the termination. A Media descriptor includes a series of Stream descriptors. Each Stream descriptor is intended for a single stream, and includes these descriptors: LocalControl, Local, and Remote. A LocalControl descriptor includes stream-related control information, for example, Mode, ReserveGroup, and ReserveValue. The Local descriptor covers the features of the streams received locally, and the Remote descriptor covers the features of the streams received remotely, for example, address, port, and codec algorithm, which are expressed through Session Description Protocol (SDP).

Further, packages are categorized into base package and extended package. The MG may choose whether to publish the corresponding base package when publishing the supported extended package to the MGC. The MGC can apply the base package to the control interface between the MGC and the MG only if the MG publishes the base package. If the MG does not publish the base package, the MGC can apply the extended package but cannot apply the base package. For example, a "Network" packet (identified as "nt") in the H.248 serves as a base package, and a Real-time Transport Protocol package (identified as "rtp") is derived from the base package, where the rtp package serves as an extended package. The rtp package inherits the Duration (identified as "dur"), Octets Sent (identified as "os"), Octets Received (identified as "or") and other statistic parameters of the nt package. At the time of citation, rtp/dur is equivalent to nt/dur, rtp/os is equivalent to nt/os, and rtp/or is equivalent to nt/or. On this basis, the rtp package has extension statistic parameters, for example, Packets Sent (identified as "ps"), Packets Received (identified as "pr"), Packet Loss (identified as "pl"), Jitter (identified as "jit"), and Delay (identified as "delay"). Such parameters can be cited as rtp/ps, rtp/pr, rtp/pl, rtp/jit, and rtp/delay only. If the MG publishes the nt package and the rtp package, the MGC can cite rtp/dur, rtp/os, and rtp/or as well as nt/dur, nt/os, and nt/or. If the MG publishes the rtp package only, the MGC can cite rtp/dur, rtp/os, and rtp/or only. If a base package is not applicable because the MG does not publish the package, the MG has to substitute the extended package corresponding to the base package for the base package to cite the package elements of the base package; if the MGC does not support application of this extended package for its own reasons such as not supporting the extended package, the MGC is unable to process the messages that come from the MG and apply this extended package. Therefore, a new mechanism needs to be launched so that the MGC can control the MG to publish and apply the base package and the extended package.

Therefore, to achieve the objective that the MGC controls the MG to apply the base package and the extended package, the (media) gateway control protocol needs to be extended. The present invention is elaborated below with reference to preferred embodiments.

### Embodiment 1

FIG. 2 is a flowchart of Embodiment 1 of the present invention, which includes the following steps:
Step 101: The MG receives an audit command request delivered by the MGC, where the audit command request carries a package descriptor indicating an audit of the packages supported by the MG.
Step 102: The MG returns an audit command response that carries identifiers of the supported packages to the MGC, namely, publishes the packages.
Step 103: The MGC and the MG apply the identifiers of the packages on the control interface between the MGC and the MG, where the identifiers are published by the MG.

The detailed operations may be: The MGC and the MG each stores the identifiers of the packages published by the MG, so that the MGC and the MG select a package among them and apply the package as required. This embodiment prevents the MG from selecting an unpublished package that is not supported by the MGC, and solves the contradiction of publishing and applying packages on the control interface between the MGC and the MG.

### Embodiment 2

Packages are categorized into base package and extended package. Whether to publish a base package at the time of publishing the extended package corresponding to the base package decides whether it is necessary to use the identifier of the extended package when the package elements of the base package are cited on the control interface between the MGC and the MG. In this embodiment, a property is used to indicate whether a base package is published at the time of publishing the extended package corresponding to the base package. That property may be defined in an existing package or a new package, and is expressed in the "package identifier/property identifier" format. For example, the new package is named as "Package Identifier Publishing and Application (identified as pipa) package", and the property is named as "Base Package Publishing" (identified as bpp) and applied in the "pipa/bpp" format.

This property may be intended for the root termination representative of the entirety of the MG, or for individual termination in the MG, and is applied in the TerminationState descriptor. This property is of an enumeration type, and its value may be "Both", indicating that both the base package identifier and the extended package identifier are published; or "Ext", indicating that only the extended package identifier is published; or "Opt", indicating that the publishing of the base package identifier depends on the MG. The default value is "Opt". Because a package may be both a base package and an extended package concurrently, the publishing of the base package identifier is intended for the case that the package serves as an extended package. For non-extended packages such as stand-alone package, the base package is not applicable.

When the MGC needs to control the MG to publish the base package along with the extended package, the MGC sets the preceding BPP property and sends the property to the MG. The MGC may use a command such as Add, Move, Modify, and Subtract to transmit the property, and to set the whole MG represented by the root termination or an individual termination in the MG. Afterward, when the MGC sends an audit request intended for the package descriptor to the MG, the MG returns an audit response that carries the supported package identifiers to the MGC. When returning the audit response, the MG decides whether to add the identifier of the base package along with the identifier of the extended package into the audit response according to the setting of this property.

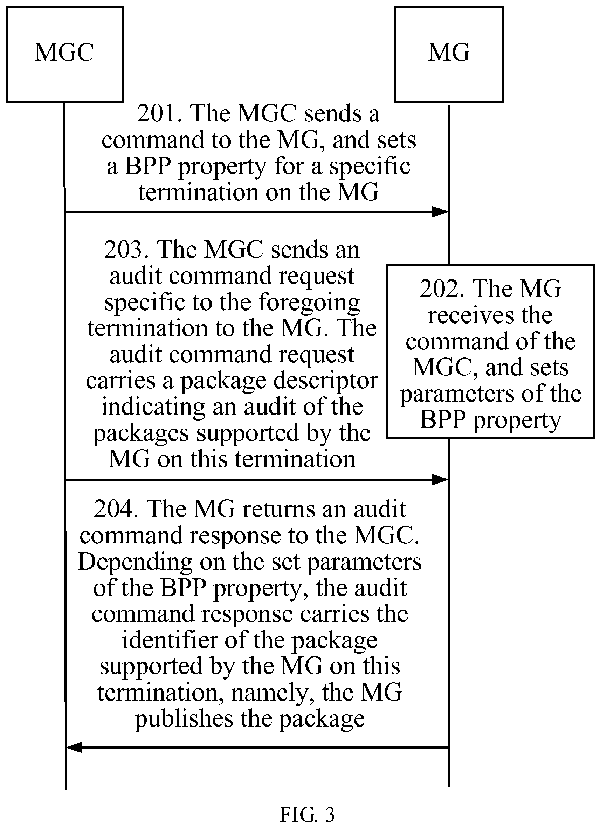

FIG. 3 is a flowchart of Embodiment 2 of the present invention, which includes the following steps:
Step 201: The MGC sends a command to the MG, and sets a BPP property for a specific termination on the MG.

Through a command such as Add, Move, Modify, and Subtract, the MGC may add the BPP property into a TerminationState descriptor specific to this termination, and send the descriptor to the MG. The termination may be a root termination representative of the whole MG, or an individual termination in the MG.

In another embodiment of the present invention, after completion of the setting of the BPP property is completed, the MGC may send a command to the MG as required, instructing the MG to modify the value of this property.

Step 202: The MG receives the command of the MGC, and sets parameters of the BPP property.

Step 203: The MGC sends an audit command request specific to the preceding termination to the MG. The audit command request carries a package descriptor indicating an audit of the packages supported by the MG on this termination.

The audit command request sent by the MGC to the MG may be AuditValue that carries a package descriptor.

Step 204: The MG returns an audit command response to the MGC. Depending on the set parameters of the BPP property, the audit command response carries the identifier of the package supported by the MG on this termination, namely, the MG publishes the package.

If the value of the BPP property is set to "Both", it indicates that the MGC requires the MG to publish both the base package and the extended package. Therefore, when publishing a package that is an extended package derived from a base package, the MG needs to publish the base package along with the extended package.

If the value of the BPP property is set to "Ext", it indicates that the MGC requires the MG to publish the extended package only. Therefore, when the MG publishes a package, even if the package is an extended package derived from a base package, the MG needs to publish the extended package only.

If the value of the BPP property is set to "Opt", it indicates that the MGC lets the MG choose whether to publish the base package at its own discretion. Therefore, when publishing a package that is an extended package derived from a base package, the MG decides whether to publish the base package along with the extended package at its own discretion.

Through the BPP property, the MGC controls the MG whether to publish the base package along with the extended package freely, thus deciding whether both the extended package identifier and the base package identifier can be used at the time of citing the package elements of the base package.

### Embodiment 3

This embodiment uses a property to represent the base-extended relationship of the packages, and represent the publishing state. This property may be defined in an existing package or a new package, and is expressed in the "package identifier/property identifier" format. For example, the preceding pipa package is reused, and the property is named as "Package Extension Information" (identified as pei) and applied in the "pipa/pei" format. In another embodiment of the present invention, the publishing state is not mandatory, and a property is used to represent the base-extended relationship of the packages. In the following description, it is assumed that a property is used to represent the base-extended relationship of the packages, and represent the publishing state.

This property may be intended for the root termination representative of the entirety of the MG, or for individual termination in the MG, and is applied in the TerminationState descriptor. The type of this property is Sub-list of String. Each element in the sub-list represents extension information of a package, including base package name, optional extended package name, and optional publishing state. The package name is composed of a package identifier and an optional version. If the extended package name does not appear, it indicates that the package corresponding to the base package name is a stand-alone package. The publishing state may be "Both" indicating that both the base package and the extended package are published, or "Ext" indicating that only the base package is published and the extended package is not published. If the publishing state does not appear, the value "Both" applies. If the version does not appear, version 1 applies.

For example, the format is "base package name [:extended package name][:publishing state]", where: the "base package name" and the "extended package name" are in the "package identifier-version" format; "[...]" indicates optional content; "nt" indicates that the package is a stand-alone package and is published; "nt:rtp:both" indicates that the rtp is an extended package corresponding to the base package "nt", and both rtp and nt are published; and "nt: tdmc:ext" indicates that tdmc is an extension corresponding to the base package "nt", and only tdmc is published.

When the MGC needs to understand the base-extended relationship of packages supported by the MG as well as the publishing state, the MGC audits the preceding PEI property on the MG. The MGC may use an AuditValue command to audit the whole MG represented by the root termination or an individual termination in the MG. Afterward, the corresponding audit response returned by the MG to the MGC carries the base-extended relationship of the packages supported by the MG, and the state of publishing the packages. Therefore, the MGC can process the package identifier carried in the message from the MG according to such information.

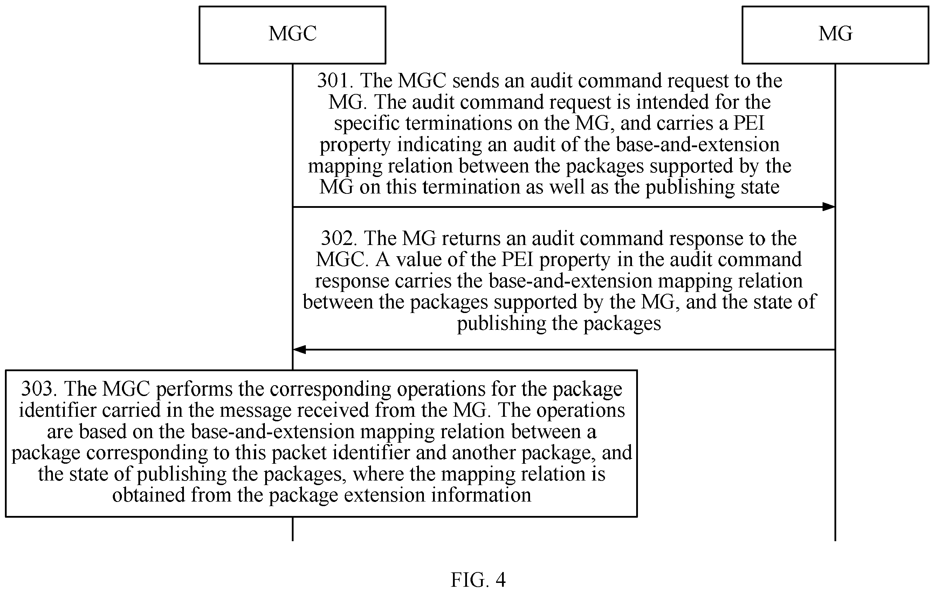

FIG. 4 is a flowchart of Embodiment 3 of the present invention, which includes the following steps:
Step 301: The MGC sends an audit command request to the MG. The audit command request is intended for the specific terminations on the MG, and carries a PEI property indicating an audit of the base-extended relationship of the packages supported by the MG on this termination as well as the publishing state.

The MGC may send the audit command request to the MG through an AuditValue command that carries the PEI property. This termination may be a root termination representative of the whole MG, or an individual termination in the MG.

Step 302: The MG returns an audit command response to the MGC. A value of the PEI property in the audit command response carries the base-extended relationship of the packages supported by the MG, and the state of publishing the packages.

The type of this property is Sub-list of String. Each element in the sub-list represents extension information of a package, including base package name, optional extended package name, and optional publishing state. The package name is composed of a package identifier and an optional version. For example, the format is "base package name [:extended package name][:publishing state]", where: the "base package name" and the "extended package name" are in the "package identifier-version" format; "[...]" indicates optional content; if the extended package name does not appear, it indicates that the package corresponding to the base package name is a stand-alone package. The publishing state may be "Both" indicating that both the base package and the extended package are published, or "Ext" indicating that only the base package is published and the extended package is not published. If the publishing state does not appear, the value "Both" applies. If the version does not appear, version 1 applies.

When the preceding audit command response publishes the relationships between the packages supported by the MG, the corresponding package identifier represents such packages. Therefore, the audit command response is equivalent to: The MG publishes the packages supported by the MG to the MGC.

Step 303: The MGC performs the corresponding operations for the package identifier carried in the message received from the MG. The operations are based on the base-extended relationship of a package corresponding to this packet identifier and another package, and the state of publishing the packages, where the mapping relationship is obtained from the package extension information.

Here is an example: A is a base package, and B is an extended package. For package element a of A: if the MG has published both A and B, the MGC can accept the MG using A/a or B/a to cite a if A is applied; if the MG publishes only B, the MGC accepts the MG using B/a to cite a if A is applied. The MGC accepts the MG using B/a to cite a if A is applied even if B is not applied because the MGC knows that B/a is A/a according to the base-extended relationship of the packages.

### Embodiment 4

This embodiment combines the properties described in the preceding two embodiments. For example, when the value of the BPP property is set to "Opt" or is the default value, it indicates that the MG itself decides whether to publish the base package along with the extended package at the time of publishing an extended package derived from a base package, the MGC may apply the PEI property to know the base-extended relationship of the packages supported by the MG as well as the publishing state.

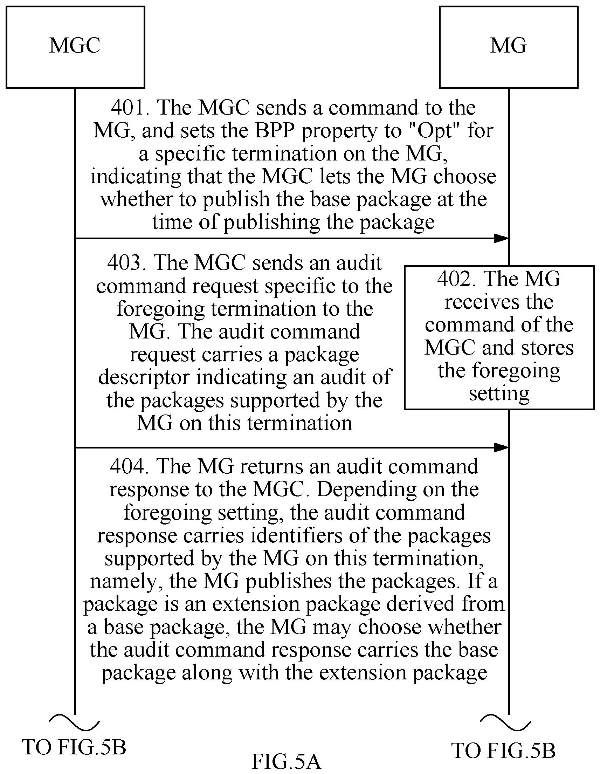

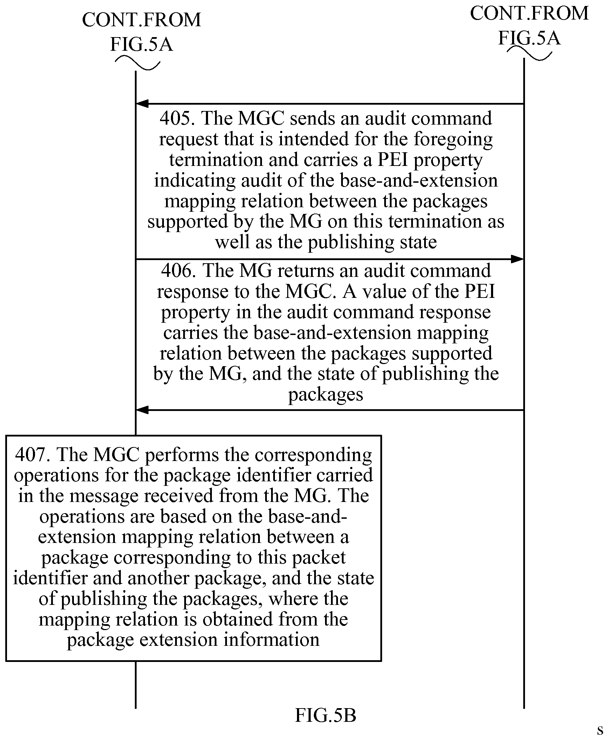

FIG. 5 is a flowchart of Embodiment 4 of the present invention, which includes the following steps:
Step 401: The MGC sends a command to the MG, and sets the BPP property to "Opt" for a specific termination on the MG, indicating that the MGC allows the MG to choose whether to publish the base package at the time of publishing the package.

Through a command such as Add, Move, Modify, and Subtract, the MGC may add the BPP property into a TerminationState descriptor specific to this termination, and send the descriptor to the MG. The termination may be a root termination representative of the whole MG, or an individual termination in the MG.

Step 402: The MG receives the command of the MGC and stores the preceding setting.

Step 403: The MGC sends an audit command request specific to the preceding termination to the MG. The audit command request carries a package descriptor indicating an audit of the packages supported by the MG on this termination.

The audit command request sent by the MGC to the MG may be AuditValue that carries a package descriptor.

Step 404: The MG returns an audit command response to the MGC. Depending on the preceding setting, the audit command response carries identifiers of the packages supported by the MG on this termination, namely, the MG publishes the packages. If a package is an extended package derived from a base package, the MG may choose whether the audit command response carries the base package along with the extended package.

Step 405: The MGC sends an audit command request to the MG. The audit command request is intended for the preceding termination, and the command carries a PEI property indicating an audit of the base-extended relationship of the packages supported by the MG on this termination as well as the publishing state.

The MGC may send the audit command request to the MG through an AuditValue command that carries the PEI property.

Step 406: The MG returns an audit command response to the MGC. A value of the PEI property in the audit command response carries the base-extended relationship of the packages supported by the MG, and the state of publishing the packages.

The type of this property is Sub-list of String. Each element in the sub-list represents extension information of a package, including base package name, optional extended package name, and optional publishing state. The package name is composed of a package identifier and an optional version. For example, the format is "base package name [:extended package name][:publishing state]", where: the "base package name" and the "extended package name" are in the "package identifier-version" format; "[...]" indicates optional content; if the base package name does not appear, it indicates that the package corresponding to the base package name is a stand-alone package by default, namely, non-extended package. The publishing state may be "Both" indicating that both the base package and the extended package are published, or "Ext" indicating that only the base package is published and the extended package is not published. If the publishing state does not appear, the value "Both" applies. If the version does not appear, version 1 applies.

Step 407: The MGC performs the corresponding operations for the package identifier carried in the message received from the MG. The operations are based on the base-extended relationship of a package corresponding to this packet identifier and another package, and the state of publishing the packages, where the mapping relationship is obtained from the package extension information.

### Embodiment 5

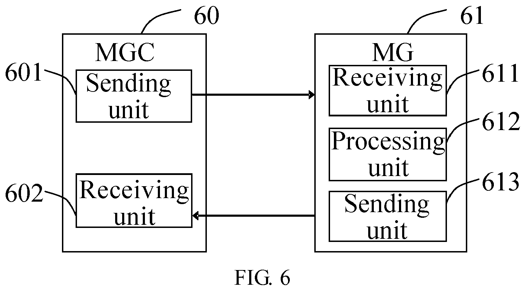

This embodiment provides a system for controlling application of the base package and the extended package. FIG. 6 shows a system structure of Embodiment 5. The system includes: an MGC 60 and an MG 61. The MGC 60 includes a sending unit 601 and a receiving unit 602, and the MG 61 includes a receiving unit 611, a processing unit 612, and a sending unit 613.

The sending unit 601 of the MGC 60 is configured to send a command request to the MG 61. The command request instructs the MG 61 to set the BPP property, and may be Add, Move, Modify, or Subtract; and/or send a command request for auditing a package descriptor or PEI property to the MG 61. The command request may be AuditValue that carries the package descriptor, instructing the MG 61 to publish the supported packages, or AuditValue that carries the PEI property, indicating an audit of the base-extended relationship of the packages supported by the MG 61.

The receiving unit 602 of the MGC 60 is configured to receive a command response that comes from the MG 61 and corresponds to the command request, where the command response corresponding to the audit command request carries the identifiers of the packages supported by the MG 61 or carries base-extended relationships of the packages supported by the MG 61.

The receiving unit 611 of the MG 61 is configured to receive the command request from the MGC 60.

The processing unit 612 of the MG 61 is configured to set the BPP property parameter according to the command request sent by the MGC 60, and/or add the identifiers of the packages supported by the MG 61 or the base-extended relationships of the packages supported by the MG 61 into the command response returned to the MGC 60, and select a package among the identifiers of the packages supported by the MG 61 and apply the selected package.

Further, the processing unit 612 is further configured to add the identifiers of the packages supported by the MG 61 into the command response returned to the MGC 60 according to the setting of the BPP property.

The sending unit 613 of the MG 61 is configured to send a command response corresponding to the command request to the MGC 60.

In this embodiment, the MGC controls the MG whether to publish the base package along with the extended package as required at the time of publishing the package; and obtains the base-extended relationships of the packages supported by the MG, thus solving the contradiction of applying base packages and extended packages on the control interface between the MGC and the MG.

After reading the preceding embodiments, those skilled in the art are clearly aware that the present invention may be implemented through hardware, or through software in addition to a necessary universal hardware platform. The technical solution under the present invention may be embodied as a software product. The software product may be stored in a non-volatile storage medium (such as CD-ROM, USB flash disk, or mobile hard disk), and may incorporate several instructions that enable a computer device (such as personal computer, server, or network device) to perform the method specified in any embodiment of the present invention.

The preceding descriptions are merely preferred embodiments of the present invention, but are not intended to limit the present invention.

## Claims

1. A method for controlling publishing and application of packages, comprising:
receiving (203), by a Media Gateway, MG, a first audit command request delivered by a Media Gateway Controller, MGC, wherein the first audit command request carries a package descriptor indicating an audit of packages supported by the MG;
adding (204), by the MG, identifiers of packages supported by the MG into a first audit command response to the MGC according to the set parameters of a Base Package Publishing, BPP, property; wherein the first audit command response is returned to the MGC; and
selecting (103), by the MG, a package among packages corresponding to the identifiers published by the MG, and applying this package to a control interface between the MG and the MGC;
wherein, before receiving (203), the method further comprises:
receiving (201), by the MG, a command from the MGC, wherein the command carries a Base Package Publishing, BPP, property;
setting (202), by the MG, parameters of the BPP property according to the command received from the MGC;
if the value of the BPP property indicates that the MGC allows the MG to choose whether to publish the base package, choosing, by the MG, whether to publish the base package along with the extended package corresponding to the base package at time of publishing the package.

2. The method according to claim 1, wherein:
the BPP property is intended for a specific termination on the MG, and the termination is a root termination representative of the whole MG or an individual termination on the MG.

3. The method according to claim 1, wherein: if the value of the BPP property indicates that the MGC allows the MG to choose whether to publish the base package at time of publishing the extended package, the method further comprises:
sending, by the MGC, a second audit command request to the MG, wherein the second audit command request carries a Package Extension Information, PEI, property indicating an audit of base-extended relationships of the packages supported by the MG; and
returning, by the MG, a second audit command response to the MGC, wherein the second audit command response carries the base-extended relationships of the packages supported by the MG.

4. The method according to claim 3, wherein:
the PEI property is intended for a specific termination on the MG, and the termination is a root termination representative of the whole MG or an individual termination in the MG.

5. The method according to claim 3, wherein the PEI property comprises:
a base package name, an optional extended package name, and an optional publishing state.

6. The method according to claim 5, wherein:
the base package name is composed of a package identifier and an optional version, and the extended package name is composed of a package identifier and an optional version.

7. The method according to claim 5, wherein:
a value of the publishing state indicates that both the base package and the extended package are published, or indicates that only the extended package is published.

8. A Media Gateway Controller, MGC, (60) **characterized in** comprising:
a sending unit (601), configured to send a first command request to a Media Gateway, MG, wherein the first command request carries a package descriptor that instructs the MG to publish packages supported by the MG, and send a second command request to the MG, wherein the second command request instructs the MG to set a Base Package Publishing, BPP, property in order to enable the MG to set the BPP property according to the second command request; if the value of the BPP property indicates that the MGC allows the MG to choose whether to publish the base package, choosing, by the MG, whether to publish the base package along with the extended package corresponding to the base package at time of publishing the package; and
a receiving unit (602), configured to receive a first command response that comes from the MG and corresponds to the first command request, wherein the first command response carries identifiers of the packages supported by the MG, wherein the identifiers of the packages are added by the MG into the first command response according to the set parameters of the BPP property.

9. The MGC according to claim 8, wherein:
the sending unit is further configured to send a third command request to the MG, wherein the third command request carries a Package Extension Information, PEI, property indicating an audit of base-extended relationships of the packages supported by the MG; and
the receiving unit is further configured to receive a third command response from the MG, wherein the third command response corresponds to the third command request and carries the base-extended relationships of the packages supported by the MG.

10. A Media Gateway, MG, (61) **characterized in** comprising:
a receiving unit (611), configured to receive a second command request sent by a Media Gateway Controller, MGC, wherein the second command request instructs the MG to set a Base Package Publishing, BPP, property, and receive a first command request from the MGC, wherein the first command request carries a package descriptor that instructs the MG to publish packages supported by the MG;
a processing unit (612), configured to set parameters of the BPP property according to the second command request sent by the MGC, add identifiers of the packages supported by the MG into a first command response returned to the MGC according to the set parameters of the BPP property, and select a package among the packages corresponding to the published identifiers supported by the MG, and apply this package to a control interface between the MG and the MGC; if the value of the BPP property indicates that the MGC allows the MG to choose whether to publish the base package, choosing, by the MG, whether to publish the base package along with the extended package corresponding to the base package at time of publishing the package; and
a sending unit (613), configured to send the first command response to the MGC, wherein the first command response corresponds to the first command request and carries the identifiers of the packages supported by the MG.

11. The MG according to claim 10, wherein:
the receiving unit (611) is further configured to: receive a third command request sent by the MGC, wherein the third command request carries a Package Extension Information, PEI, property indicating an audit of base-extended relationships of the packages supported by the MG;
the processing unit (612) is further configured to add the base-extended relationships of the packages supported by the MG into a third command response returned to the MGC; and
the sending unit (613) is further configured to send the third command response corresponding to the third command request to the MGC.

## Patentansprüche

1. Verfahren zum Steuern der Veröffentlichung und Anwendung von Paketen, das Folgendes umfasst:
Empfangen (203) durch ein Mediagateway, MG, einer ersten Auditbefehlsanforderung, die durch eine Mediagateway-Steuereinheit, MGC, zugestellt wird, wobei die erste Auditbefehlsanforderung einen Paketdeskriptor führt, der ein Audit von Paketen, das durch das MG unterstützt wird, angibt;
Hinzufügen (204) durch das MG von Bezeichnern von Paketen, die durch das MG unterstützt werden, in eine erste Auditbefehlsantwort zu der MGC gemäß den eingestellten Parametern einer Basispaketveröffentlichungs-Eigenschaft, BPP-Eigenschaft; wobei die erste Auditbefehlsantwort zu der MGC zurückgegeben wird; und
Auswählen (103) durch das MG eines Pakets aus den Paketen, die den Bezeichnern entsprechen, die durch das MG veröffentlicht sind, und Anwenden dieses Pakets auf eine Steuerschnittstelle zwischen dem MG und der MGC;
wobei das Verfahren vor dem Empfangen (203) ferner Folgendes umfasst:
Empfangen (201) durch das MG eines Befehls von der MGC, wobei der Befehl eine Basispaketveröffentlichungs-Eigenschaft, BPP-Eigenschaft, führt;
Einstellen (202) durch das MG von Parametern der BPP-Eigenschaft gemäß dem von der MGC empfangenen Befehl;
falls der Wert der BPP-Eigenschaft angibt, dass die MGC dem MG erlaubt zu wählen, ob das Basispaket veröffentlicht werden soll, Wählen durch das MG, ob das Basispaket gemeinsam mit dem erweiterten Paket, das dem Basispaket entspricht, zur Zeit der Veröffentlichung des Pakets veröffentlicht werden soll.

2. Verfahren nach Anspruch 1, wobei:
die BPP-Eigenschaft für einen spezifischen Anschluss auf dem MG vorgesehen ist und der Anschluss ein Wurzelanschluss, der für das gesamte MG repräsentativ ist, oder ein individueller Anschluss auf dem MG ist.

3. Verfahren nach Anspruch 1, wobei: falls der Wert der BPP-Eigenschaft angibt, dass die MGC dem MG erlaubt zu wählen, ob das Basispaket zur Zeit der Veröffentlichung des erweiterten Pakets veröffentlicht werden soll, das Verfahren ferner Folgendes umfasst:
Senden durch die MGC einer zweiten Auditbefehlsanforderung zu dem MG, wobei die zweite Auditbefehlsanforderung eine Paketerweiterungsinformations-Eigenschaft, PEI-Eigenschaft, führt, die ein Audit von Basis-Erweiterung-Beziehungen der Pakete, die durch das MG unterstützt werden, angibt; und
Zurückgeben durch das MG einer zweiten Auditbefehlsantwort zu der MGC, wobei die zweite Auditbefehlsantwort die Basis-Erweiterung-Beziehungen der Pakete, die durch das MG unterstützt werden, führt.

4. Verfahren nach Anspruch 3, wobei:
die PEI-Eigenschaft für einen spezifischen Anschluss des MG vorgesehen ist und der Anschluss ein Wurzelanschluss, der für das gesamte MG repräsentativ ist, oder ein individueller Anschluss in dem MG ist.

5. Verfahren nach Anspruch 3, wobei die PEI-Eigenschaft Folgendes umfasst:
einen Namen des Basispakets, einen optionalen Namen des erweiterten Pakets und einen optionalen Veröffentlichungsstatus.

6. Verfahren nach Anspruch 5, wobei:
der Name des Basispakets aus einer Paketkennung und einer optionalen Version zusammengesetzt ist, und der Name des erweiterten Pakets aus einer Paketkennung und einer optionalen Version zusammengesetzt ist.

7. Verfahren nach Anspruch 5, wobei:
ein Wert des Veröffentlichungsstatus angibt, dass sowohl das Basispaket als auch das Erweiterungspaket veröffentlicht sind, oder angibt, dass nur das erweiterte Paket veröffentlicht ist.

8. Mediagateway-Steuereinheit, MGC, (60), **dadurch gekennzeichnet, dass** sie Folgendes umfasst:
eine Sendeeinheit (601), die konfiguriert ist, eine erste Befehlsanforderung zu einem Mediagateway, MG, zu senden, wobei die erste Befehlsanforderung einen Paketdeskriptor führt, der das MG anweist, Pakete zu veröffentlichen, die durch das MG unterstützt werden, und eine zweite Befehlsanforderung zu dem MG zu senden, wobei die zweite Befehlsanforderung das MG anweist, eine Basispaketveröffentlichungs-Eigenschaft, BPP-Eigenschaft, einzustellen, um zu ermöglichen, dass das MG die BPP-Eigenschaft gemäß der zweiten Befehlsanforderung einstellt; falls der Wert der BPP-Eigenschaft angibt, dass die MGC dem MG erlaubt zu wählen, ob das Basispaket veröffentlicht werden soll, Wählen durch das MG, ob das Basispaket gemeinsam mit dem erweiterten Paket, das dem Basispaket entspricht, zur Zeit der Veröffentlichung des Pakets veröffentlicht werden soll; und
eine Empfangseinheit (602), die konfiguriert ist, eine erste Befehlsantwort zu empfangen, die von dem MG kommt und der ersten Befehlsanforderung entspricht, wobei die erste Befehlsantwort Kennungen der Pakete, die durch das MG unterstützt werden, führt, wobei die Kennungen der Pakete durch das MG in die erste Befehlsantwort gemäß den eingestellten Parametern der BPP-Eigenschaft hinzugefügt sind.

9. MGC nach Anspruch 8, wobei:
die Sendeeinheit ferner konfiguriert ist, eine dritte Befehlsanforderung zu dem MG zu senden, wobei die dritte Befehlsanforderung eine Paketerweiterungsinformations-Eigenschaft, PEI-Eigenschaft, führt, die ein Audit der Basis-Erweitert-Beziehungen der Pakete, die durch das MG unterstützt werden, angibt; und
die Empfangseinheit ferner konfiguriert ist, eine dritte Befehlsantwort von dem MG zu empfangen, wobei die dritte Befehlsantwort der dritten Befehlsanforderung entspricht und die Basis-Erweitert-Beziehungen der Pakete, die durch das MG unterstützt werden, führt.

10. Mediagateway, MG, (61), **dadurch gekennzeichnet, dass** es Folgendes umfasst:
eine Empfangseinheit (611), die konfiguriert ist, eine zweite Befehlsanforderung, die durch eine Mediagateway-Steuereinheit, MGC, gesendet wird, zu empfangen, wobei die zweite Befehlsanforderung das MG anweist, eine Basispaketveröffentlichungs-Eigenschaft, BPP-Eigenschaft, einzustellen, und eine erste Befehlsanforderung von der MGC zu empfangen, wobei die erste Befehlsanforderung einen Paketdeskriptor führt, der das MG anweist, Pakete, die durch das MG unterstützt werden, zu veröffentlichen;
eine Verarbeitungseinheit (612), die konfiguriert ist, Parameter der BPP-Eigenschaft gemäß der zweiten Befehlsanforderung, die durch die MGC gesendet wird, einzustellen, Kennungen der Pakete, die durch das MG unterstützt werden, in eine erste Befehlsantwort, die zu der MGC zurückgegeben wird, gemäß den eingestellten Parametern der BPP-Eigenschaft hinzuzufügen und ein Paket unter den Paketen auszuwählen, das den veröffentlichten Kennungen entspricht, die durch das MG unterstützt werden, und dieses Paket auf eine Steuerschnittstelle zwischen dem MG und der MGC anzuwenden; falls der Wert der BPP-Eigenschaft angibt, dass die MGC dem MG erlaubt zu wählen, ob das Basispaket veröffentlicht werden soll, Wählen durch das MG, ob das Basispaket gemeinsam mit dem erweiterten Paket, das dem Basispaket entspricht, zur Zeit der Veröffentlichung des Pakets veröffentlicht werden soll; und
eine Sendeeinheit (613), die konfiguriert ist, die erste Befehlsantwort zu der MGC zu senden, wobei die erste Befehlsantwort der ersten Befehlsanforderung entspricht und die Kennungen der Pakete, die durch das MG unterstützt werden, führt.

11. MG nach Anspruch 10, wobei:
die Empfangseinheit (611) ferner konfiguriert ist: eine dritte Befehlsanforderung, die durch die MGC gesendet wird, zu empfangen, wobei die dritte Befehlsanforderung eine Paketerweiterungsinformations-Eigenschaft, PEI-Eigenschaft, führt, die ein Audit von Basis-Erweitert-Beziehungen der Pakete, die durch das MG unterstützt werden, führt;
die Verarbeitungseinheit (612) ferner konfiguriert ist, die Basis-Erweitert-Beziehungen der Pakete, die durch das MG unterstützt werden, in eine dritte Befehlsantwort, die zu der MGC zurückgegeben wird, hinzuzufügen; und
die Sendeeinheit (613) ferner konfiguriert ist, die dritte Befehlsantwort, die der dritten Befehlsanforderung entspricht, zu der MGC zu senden.

## Revendications

1. Procédé de commande de l'édition et de l'application de progiciels, comprenant :
la réception (203), par une Passerelle Multimédia, MG (Media Gateway), d'une première demande de commande d'audit délivrée par un Contrôleur de Passerelle Multimédia, MGC (Media Gateway Contrôler), dans lequel la première demande de commande d'audit achemine un descripteur de progiciel indiquant un audit de progiciels pris en charge par la MG ;
l'ajout (204), par la MG, d'identifiants de progiciels pris en charge par la MG dans une première réponse à une commande d'audit au MGC conformément aux paramètres définis d'une propriété d'Edition de Progiciel de Base, BPP (Base Package Publishing) ; dans lequel la première réponse à la commande d'audit est renvoyée au MGC ; et
la sélection (103), par la MG, d'un progiciel parmi des progiciels correspondant aux identifiants édités par la MG, et l'application de ce progiciel à une interface de commande entre la MG et le MGC ;
dans lequel, avant la réception (203), le procédé comprend en outre :
la réception (201), par la MG, d'une commande en provenance du MGC, dans lequel la commande achemine une propriété d'Edition de Progiciel de Base, BPP ;
la définition (202), par la MG, de paramètres de la propriété BPP conformément à la commande reçue en provenance du MGC ;
si la valeur de la propriété BPP indique que le MGC permet à la MG de choisir d'éditer ou non le progiciel de base, le choix, par la MG, d'éditer ou non le progiciel de base en association avec le progiciel étendu correspondant au progiciel de base au moment de l'édition du progiciel.

2. Procédé selon la revendication 1, dans lequel :
la propriété BPP est destinée à une terminaison spécifique sur la MG, et la terminaison est une terminaison racine représentative de l'ensemble de la MG ou une terminaison individuelle sur la MG.

3. Procédé selon la revendication 1, dans lequel : si la valeur de la propriété BPP indique que le MGC permet à la MG de choisir d'éditer ou non le progiciel de base au moment de l'édition du progiciel étendu, le procédé comprend en outre :
l'envoi, par le MGC, d'une deuxième demande de commande d'audit à la MG, dans lequel la deuxième demande de commande d'audit achemine une propriété d'Information d'Extension de Progiciel, PEI (Package Extension Information), indiquant un audit de relations à base étendue des progiciels pris en charge par la MG ; et
le renvoi, par la MG, d'une deuxième réponse à la commande d'audit au MGC, dans lequel la deuxième réponse à la commande d'audit achemine les relations à base étendue des progiciels pris en charge par la MG.

4. Procédé selon la revendication 3, dans lequel :
la propriété PEI est destinée à une terminaison spécifique sur la MG, et la terminaison est une terminaison racine représentative de l'ensemble de la MG ou une terminaison individuelle dans la MG.

5. Procédé selon la revendication 3, dans lequel la propriété PEI comprend :
un nom de progiciel de base, un nom de progiciel étendu facultatif et un état d'édition facultatif.

6. Procédé selon la revendication 5, dans lequel :
le nom de progiciel de base se compose d'un identifiant de progiciel et d'une version facultative, et le nom de progiciel étendu se compose d'un identifiant de progiciel et d'une version facultative.

7. Procédé selon la revendication 5, dans lequel :
une valeur de l'état d'édition indique que le progiciel de base et le progiciel étendu sont tous deux édités, ou indique que seul le progiciel étendu est édité.

8. Contrôleur de Passerelle Multimédia, MGC, (60) **caractérisé en ce qu'**il comprend :
une unité d'envoi (601), configurée pour envoyer une première demande de commande à une Passerelle Multimédia, MG, dans lequel la première demande de commande achemine un descripteur de progiciel qui ordonne à la MG d'éditer des progiciels pris en charge par la MG, et envoyer une deuxième demande de commande à la MG, dans lequel la deuxième demande de commande ordonne à la MG de définir une propriété d'Edition de Progiciel de Base, BPP, afin de permettre à la MG de définir la propriété BPP conformément à la deuxième demande de commande ; si la valeur de la propriété BPP indique que le MGC permet à la MG de choisir d'éditer ou non le progiciel de base, le choix, par la MG, d'éditer ou non le progiciel de base en association avec le progiciel étendu correspondant au progiciel de base au moment de l'édition du progiciel ; et
une unité de réception (602), configurée pour recevoir une première réponse à la commande qui provient de la MG et correspond à la première demande de commande, dans lequel la première réponse à la commande achemine des identifiants des progiciels pris en charge par la MG, dans lequel les identifiants des progiciels sont ajoutés par la MG à la première réponse à la commande conformément aux paramètres définis de la propriété BPP.

9. MGC selon la revendication 8, dans lequel :
l'unité d'envoi est en outre configurée pour envoyer une troisième demande de commande à la MG, dans lequel la troisième demande de commande achemine une propriété d'Information d'Extension de Progiciel, PEI, indiquant un audit de relations à base étendue des progiciels pris en charge par la MG ; et
l'unité de réception est en outre configurée pour recevoir une troisième réponse à la commande en provenance de la MG, dans lequel la troisième réponse à la commande correspond à la troisième demande de commande et achemine les relations à base étendue des progiciels pris en charge par la MG.

10. Passerelle Multimédia, MG, (61) **caractérisée en ce qu'**elle comprend :
une unité de réception (611), configurée pour recevoir une deuxième demande de commande envoyée par le Contrôleur de Passerelle Multimédia, MGC, dans laquelle la deuxième demande de commande ordonne à la MG de définir une propriété d'Edition de Progiciel de Base, BPP, et recevoir une première demande de commande en provenance du MGC, dans laquelle la première demande de commande achemine un descripteur de progiciel qui ordonne à la MG d'éditer des progiciels pris en charge par la MG ;
une unité de traitement (612), configurée pour définir des paramètres de la propriété BPP conformément à la deuxième demande de commande envoyée par le MGC, ajouter des identifiants des progiciels pris en charge par la MG à une première réponse à la commande renvoyée au MGC conformément aux paramètres définis de la propriété BPP, et sélectionner un progiciel parmi les progiciels correspondant aux identifiants édités pris en charge par la MG, et appliquer ce progiciel à une interface de commande entre la MG et le MGC ; si la valeur de la propriété BPP indique que le MGC permet à la MG de choisir d'éditer ou non le progiciel de base, le choix, par la MG, d'éditer ou non le progiciel de base en association avec le progiciel étendu correspondant au progiciel de base au moment de l'édition du progiciel ; et
une unité d'envoi (613), configurée pour envoyer la première réponse à la commande au MGC, dans laquelle la première réponse à la commande correspond à la première demande de commande et achemine les identifiants des progiciels pris en charge par la MG.

11. MG selon la revendication 10, dans laquelle :
l'unité de réception (611) est en outre configurée pour : recevoir une troisième demande de commande envoyée par le MGC, dans laquelle la troisième demande de commande achemine une propriété d'Information d'Extension de Progiciel, PEI, indiquant un audit de relations à base étendue des progiciels pris en charge par la MG ;
l'unité de traitement (612) est en outre configurée pour ajouter les relations à base étendue des progiciels pris en charge par la MG à une troisième réponse à la commande renvoyée au MGC ; et
l'unité d'envoi (613) est en outre configurée pour envoyer la troisième réponse à la commande correspondant à la troisième demande de commande au MGC.
